# EUROPEAN PATENT SPECIFICATION

(11) **EP 2 167 377 B1**
(45) Date of publication and mention of the grant of the patent: **26.10.2011**
(21) Application number: 08774291.2
(22) Date of filing: 25.06.2008
(51) Int. Cl.: B64C 1/12

(54) **CORROSION-RESISTANT CONNECTION BETWEEN A FIRST COMPONENT AND A SECOND COMPONENT**
KORROSIONSFESTE VERBINDUNG ZWISCHEN EINER ERSTEN KOMPONENTE UND EINER ZWEITEN KOMPONENTE
RACCORDEMENT RESISTANT A LA CORROSION ENTRE UN PREMIER ET UN DEUXIEME COMPOSANT

(30) Priority: 26.06.2007 DE 102007029337; 26.06.2007 US 946202 P
(43) Date of publication of application: 31.03.2010
(73) Proprietor: Airbus Operations GmbH, 21129 Hamburg (DE)
(72) Inventor: ROMING, Thorsten, 21709 Himmelpforten (DE); SCHROEER, Thorsten, 21614 Buxtehude (DE); KIRSTEIN, Hauke, 25479 Ellerau (DE)
(74) Representative: Peckmann, Ralf
(86) International application number: PCT/EP2008/058097
(87) International publication number: WO 2009/000863

(56) References cited:
- GB-A- 2 212 580

## Description

The invention relates to a connection, for use in aircraft in particular, between a first component and a second component, the first component being formed from a metallic material, in particular an aluminium alloy, and the second component being formed from a composite material, in particular a carbon-fibre-reinforced plastics material. Such a connection is known from GB-2212580, which discloses all the features of the preamble of claim 1.

Components made of carbon-fibre-reinforced plastics materials are increasingly used in the modern aircraft construction industry as connection arrangements for reinforcing the fuselage. Mechanically connecting carbon-fibre-reinforced components and conventional components, which are formed, for example, from aluminium alloy materials, to form a complex connection arrangement is problematic for numerous reasons.

On the one hand, the coefficients of thermal expansion of the aforementioned materials are different, which may lead to temperature-induced stresses in the connection. On the other hand, a mechanical connection between metal components and composite fibre components, in particular in the region of the component contact area, is susceptible to corrosion processes to a very high degree.

The object of the invention is to provide a substantially corrosion-resistant connection between a first component formed from an aluminium alloy material and a second component formed from a composite material.

This object is achieved by a connection with the features of claim 1.

Corrosion processes between the first component and the second component are substantially prevented by providing the first component and/or the second component with a ceramic coating as a protection against corrosion, at least in the region of a contact area.

The ceramic coating is preferably applied to the first component, formed from an aluminium alloy in particular, at least in the region of the contact area between the components. Alternatively, the second component, or the first and second components, can be provided with a ceramic coating. The second component is generally formed from a carbon-fibre-reinforced thermoplastic or thermosetting polymer. The second component is particularly preferably formed from a carbon-fibre-reinforced, heavy-duty thermoplastic polymer or a carbon-fibre-reinforced epoxy resin material.

The ceramic coating is applied to the first and/or the second component by the manufacturer while applying suitable pressure and temperature parameters. The layer thickness of the ceramic coating is preferably less than 0.1 mm.

Further advantageous embodiments of the connection are explained in the other claims.

In the drawings:
Fig. 1 is a perspective view of a detail of an aircraft fuselage comprising a connection according to the invention, and
Fig. 2 is a sectional view along the line II-II in Fig. 1.

In the drawing, like constructional elements bear like reference numerals.

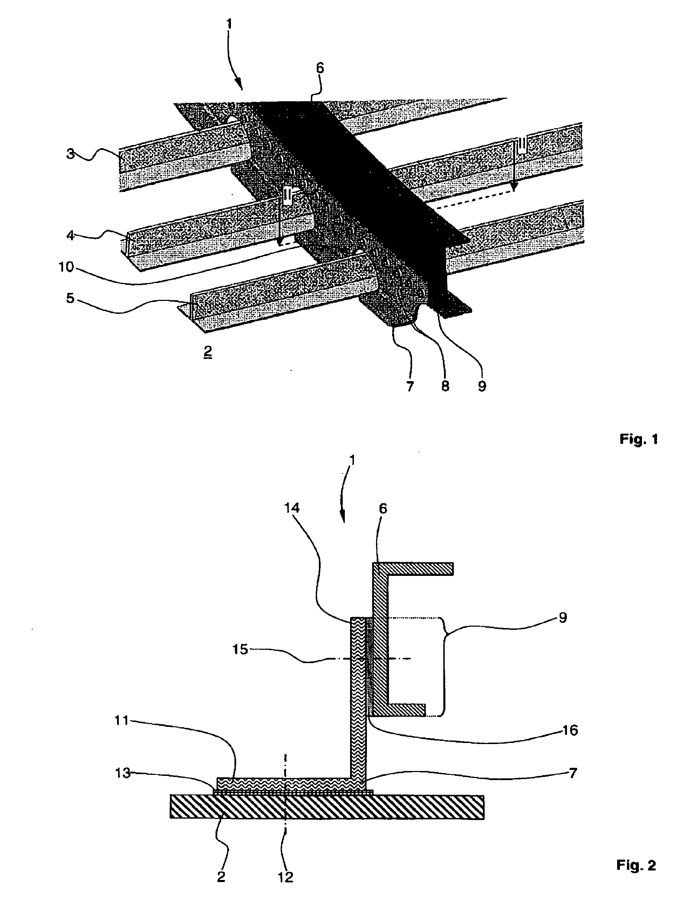

Fig. 1 is a perspective view of a detail of an aircraft fuselage using a connection 1 formed according to the invention.

Fixed to a fuselage skin 2 of a fuselage are a plurality of reinforcement profiles (known as "stringers"), of which only reinforcement profiles 3 to 5 are shown for the sake of the clarity of the drawing. The reinforcement profiles 3 to 5, which each have a T-shaped cross-section, extend parallel to a longitudinal axis of the fuselage (not shown) at a substantially uniform distance from one another. A large number of ribs, only one rib 6 of which is marked in the representation in Fig. 1, extend transversely to the reinforcement profiles 3 to 5. The rib 6 is preferably an annular rib formed from a high-strength aluminium alloy material.

The rib 6 (first component) is mechanically connected to the fuselage skin 2 by a curved angle bracket 7 (second component) which is formed from a carbon-fibre-reinforced plastics material, in particular a high-strength thermoplastic polymer, in which a large number of carbon fibres are embedded to form a fibre-reinforced arrangement. The bend radius of the angle bracket 7, which preferably has an L-shaped cross-section, is matched as closely as possible to the radius of curvature of the fuselage. Alternatively, the angle bracket 7 may also be formed from a carbon-fibre-reinforced thermosetting polymer, such as a curable epoxy resin with carbon fibres embedded therein.

The angle bracket 7 is connected to the rib 6 by a large number of rivets 8. The rib 6 is provided with a preferably thin layer of a ceramic coating (not shown in Fig. 1), at least in the region of a contact area 9 with the angle bracket 7, in order to prevent corrosion processes between the components in the region of the contact area 9. The ceramic coating is preferably less than 0.1 mm thick. A further sealing layer (not shown in greater detail) may also be arranged in the region of the contact area 9. The rib 6 which is connected to the angle bracket 7 in the region of the contact area 9 represents the connection 1 according to the invention, a large number of the connections shown in Fig. 1 and 2 being required to produce the fuselage reinforcement structure. The reinforcement profiles 3 to 5 are guided underneath the rib 6 or "through" the angle bracket 7 through approximately semicircular recesses of the angled profile 7, which are sunk into a vertical web and one recess 10 of which is provided with a reference numeral by way of example. In order that the reinforcement profiles 3 to 5 rest as completely as possible over their surface on the fuselage skin 2, a lower (base or foot) flange of the angled profile 7 is provided with rectangular recesses in the region of the reinforcement profiles 3 to 5, the width of the recesses approximately corresponding in each case to the width of the lower (base or foot) flanges of the reinforcement profiles 3 to 5.

The angle bracket 7 and the fuselage skin 2 can be connected by means of rivets, screws and/or adhesive, for example.

Fig. 2 is a cross-section through a connection formed according to the invention.

A first leg 11 (lower or base flange) of the angle bracket 7 is connected to the fuselage skin 2 by means of a rivet connection 12. A sealing layer 13 is arranged between the angle bracket 7 and the fuselage skin 2. The sealing layer 13 ensures that the fuselage is pressure-tight. The sealing layer 13 does not act to protect against corrosion. A second leg 14 (vertical web) of the angle bracket 7 is connected to the rib 6 by a further rivet connection 15.

The rib 6 is provided with a ceramic coating 16, at least in the region of the contact area 9. The ceramic coating 16 is up to 0.1 mm thick and is formed, for example, from a ceramic material made of Al₂O₃ (aluminium oxide) and TiO₂. The ceramic coating 16 may alternatively be formed from other ceramic materials and/or chemical compounds, as long as they are sufficiently electrically insulating to prevent electrolytic corrosion processes (contact corrosion) occurring between the angle bracket 7 and the rib 6, which is formed in this embodiment from an aluminium alloy.

The ceramic coating 16 can be sprayed onto the contact area 9 using the "HVOF" process (high-velocity oxy-fuel method). In order to form the ceramic coating 16, the ceramic particles are sprayed in this process by means of converging or diverging (Laval) nozzles, using kerosene for example, at a temperature of up to 3,500 °C. The ceramic particles are accelerated to 2,000 to 2,500 m/s by a flame arc and are sprayed at this high velocity against the contact area 9. The ceramic particles cool very rapidly, however, thus avoiding the working region becoming excessively heated. The ceramic particles are attached very strongly to the component surface in this forging-like process due to the fact that said ceramic particles impact the contact area 9 at an extremely high velocity. As a result, the ceramic coating is very hard and resistant to wear. The ceramic coating 16 does not flake off from the contact area 9 when said area is deformed, regardless of the high degree of hardness of said ceramic coating.

The ceramic coating 16 can be applied both to aluminium alloy components and to carbon-fibre-reinforced plastics material components.

Alternatively, it is possible to provide the second component, which is formed from the non-metal material (generally a carbon-fibre-reinforced composite material), with a ceramic coating at least in portions in the region of the contact area 9 between the two components. The second component may be coated with a ceramic material in the region of the contact area as an alternative to or in addition to the first component, which is generally formed from a metal material (generally a high-strength aluminium alloy) being coated therewith.

The stationary or fixed connection 1 comprising a ceramic coating 16, which is arranged at least in the region of the contact area 9 between the two components, is suitable for corrosion-resistant fastening and connecting applications between any types of components in aircraft, beyond the embodiment explained by way of example in the descriptions of Fig. 1 and 2 located in the region of the fuselage structure of an aircraft.

### List of reference numerals

- 1: connection arrangement
- 2: fuselage skin
- 3: reinforcement profile (stringer)
- 4: reinforcement profile (stringer)
- 5: reinforcement profile (stringer)
- 6: rib
- 7: angle bracket
- 8: rivet
- 9: contact area
- 10: recess (angle bracket)
- 11: first leg (angle bracket)
- 12: rivet connection
- 13: sealing layer
- 14: second leg (angle bracket)
- 15: rivet connection
- 16: ceramic coating

## Claims

1. Connection (1) for use in aircraft, comprising:
a first component (6) made of an aluminium alloy;
a second component (7) made of a carbon-fibre-reinforced plastics material; and a contact area (9), at which the first component (6) and the second component (7) are connected to one another **characterized in that**, the first component (6) and/or the second component (7) are provided with a wear-resistant and deformation-resistant ceramic coating (16) at least in the contact area (9) for protection against contact corrosion between the components (6, 7).

2. Connection (1) according to claim 1, **characterised in that** the first component (6) is a rib (6).

3. Connection (1) according to claim 2, **characterised in that** the second component is an angle bracket (7) for producing a mechanical connection between the rib (6) and a fuselage skin (2) of the aircraft.

4. Connection (1) according to any one of the preceding claims, **characterised in that** the ceramic coating (16) is formed from Al₂O₃, TiO₂ or another ceramic material.

5. Connection (1) according to any one of the preceding claims, **characterised in that** the layer of the ceramic coating (16) is less than 0.1 mm thick.

6. Connection (1) according to any of claims 3 to 5, **characterised in that** the angle bracket (7) is formed from a carbon-fibre-reinforced thermoplastic polymer.

## Patentansprüche

1. Verbindung (1) zur Verwendung in einem Flugzeug, die Folgendes umfasst:
- eine erste Komponente (6), die aus einer Aluminiumlegierung besteht;
- eine zweite Komponente (7), die aus einem kohlefiaserverstärkten Kunststofifimaterial besteht; und eine Kontaktfläche (9), an der die erste Komponente (6) und die zweite Komponente (7) miteinander verbunden sind,
**dadurch gekennzeichnet, dass** die erste Komponente (6) und/oder die zweite Komponente (7) zum Schutz vor Kontaktkorrosion zwischen den Komponenten (6, 7) mindestens an der Kontaktfiläche (9) mit einer verschleißfiesten und verformungsbeständigen Keramikbeschichtung (16) versehen sind.

2. Verbindung (1) nach Anspruch 1, **dadurch gekennzeichnet, dass** die erste Komponente (6) eine Rippe (6) ist.

3. Verbindung (1) nach Anspruch 2, **dadurch gekennzeichnet, dass** die zweite Komponente eine Winkelhalterung (7) ist, um eine mechanische Verbindung zwischen der Rippe (6) und einer Rumpfhaut (2) des Flugzeuges herzustellen.

4. Verbindung (1) nach einem der vorangehenden Ansprüche, **dadurch gekennzeichnet, dass** die Keramikbeschichtung (16) aus Al2O3, TiO2 oder einem anderen Keramikmaterial besteht.

5. Verbindung (1) nach einem der vorangehenden Ansprüche, **dadurch gekennzeichnet, dass** die Schicht der Keramikbeschichtung (16) weniger als 0,1 mm dick ist.

6. Verbindung (1) nach einem der Ansprüche 3 bis 5, **dadurch gekennzeichnet, dass** die Winkelhalterung (7) aus einem kohlefiaserverstärkten Thermoplastpolymer besteht.

## Revendications

1. Raccordement (1) à utiliser dans un aéronef, comprenant :
- un premier composant (6) constitué d'un alliage d'aluminium ;
- un second composant (7) constitué d'un matériau en plastique renforcé de fibres de carbone; et
- une zone de contact (9) au niveau de laquelle le premier composant (6) et le second composant (7) sont reliés l'un à l'autre,
**caractérisé en ce que** le premier composant (6) et/ou le second composant (7) sont dotés d'un revêtement céramique résistant à l'usure et à la défiormation (16) au moins dans la zone de contact (9) pour assurer une protection contre la corrosion entre les composants (6, 7).

2. Raccordement (1) selon la revendication 1, **caractérisé en ce que** le premier composant (6) est une nervure (6).

3. Raccordement (1) selon la revendication 2, **caractérisé en ce que** le second composant est une équerre de fixation (7) permettant de produire un raccordement mécanique entre la nervure (6) et un revêtement de fuselage (2) de l'aéronef.

4. Raccordement (1) selon l'une des revendications précédentes, **caractérisé en ce que** le revêtement céramique (16) est formé à partir de A1203, Ti02 ou d'un autre matériau céramique.

5. Raccordement (1) selon l'une des revendications précédentes, **caractérisé en ce que** l'épaisseur de la couche du revêtement céramique (16) est inférieure à 0,1 mm.

6. Raccordement (1) selon l'une des revendications 3 à 5, **caractérisé en ce que** l'équerre de fixation (7) est formée à partir d'un polymère thermoplastique renforcé de fibres de carbone.
